# NEUE EUROPÄISCHE PATENTSCHRIFT

(11) **EP 0 754 366 B2**
(45) Veröffentlichungstag und Bekanntmachung des Hinweises auf die Entscheidung über den Einspruch: **20.08.2008**
(45) Hinweis auf die Patenterteilung: 19.06.2002
(21) Anmeldenummer: 96900964.6
(22) Anmeldetag: 17.01.1996
(51) Int. Cl.: H02K 41/03, H02K 1/27

(54) **VERFAHREN ZUR HERSTELLUNG EINES SYNCHRON-LINEARMOTORS**
METHOD OF MANUFACTURING A SYNCHRONOUS LINEAR MOTOR
PROCEDE DE FABRICATION D'UN MOTEUR LINEAIRE SYNCHRONE

(30) Priorität: 03.02.1995 DE 19503511
(43) Veröffentlichungstag der Anmeldung: 22.01.1997
(73) Patentinhaber: SIEMENS AKTIENGESELLSCHAFT, 80333 München (DE)
(72) Erfinder: STOIBER, Dietmar, D-82031 Grünwald (DE); ROSNER, Peter, Dr., DE-81371 München (DE)
(74) Vertreter: Prechtel, Jörg
(86) Internationale Anmeldenummer: PCT/EP1996/000172
(87) Internationale Veröffentlichungsnummer: WO 1996/024189

(56) Entgegenhaltungen:
- EP-B1- 0 437 571
- WO-A-93/01646
- DE-A- 4 302 807
- FR-A- 2 279 246
- FR-A- 2 691 592
- US-A- 3 828 212
- US-A- 4 859 974
- US-A- 4 868 431
- US-A- 5 051 225
- Kopie eines Artikels:"Principle of Linear Motor Simultaneous Stretching" (Simultan-Streckmaschine mit Linearmotorantrieb) von der Firma Brueckner, ohne Datum)

## Beschreibung

Die Erfindung betrifft ein Verfahren zur Herstellung eines Synchron-Linearmotors gemäß dem Oberbegriff von Anspruch 1.

Bei Synchron-Linearmotoren besteht das Problem, daß sich die in alternierender magnetischer Nord-Südpolung anzuordnenden Permanentmagnete während des Klebevorgangs infolge der Einwirkung der gegenseitigen magnetischen Kräfte fortbewegen und nicht auf den vorgesehenen Positionen fixieren lassen.
Die US 5,051,225 A zeigt einen Linearmotor zum Betrieb einer Filmstreckmaschine, bei welchem der Sekundärteil (Läufer) aus einer ferromagnetischen. Trägerplatte besteht, auf welcher Permanentmagnete derart angebracht sind, daß sie jeweils einen Parallelspalt zueinander einschließen. Zur Bereitstellung einer dynamischen elektromagnetischen Dämpfung der bewegten Läufer sind die quaderförmigen Permanentmagnete an 5 Seiten von einem unmagnetischen, elektrisch leitfähigen Käfig, etwa aus Kupfer oder aus Aluminium, umgeben. In diesem Käfig sind die Permanentmagnete ein Polteilungsrastermaß voneinander entfernt gehalten. Der Käfig ist dabei als massives Bauteil mit Vertiefungen ausgeführt, welche derart bemessen sind, daß ein Permanentmagnet in jeweils einer Vertiefung aufgenommen werden kann. Der Käfig ist durch Schrauben an der ferromagnetischen Trägerplatte befestigt.

Aus der US-3,828,121 ist es bekannt, bei einem mit einer tassenförmigen Vertiefung versehenen Schwungrad, am Innenumfang der Vertiefung Permanentmagnete mit Hilfe eines Käfigringes und eines Werkzeugs zur radialen Positionierung der Permanentmagneten festzukleben.

Aus der FR 2 279 246 ist es ferner bekannt, bei einem Läufer einer elektrischen Maschine die Permanentmagneten in radial nach außen offenen Ausschnitten eines scheibenförmigen Käfigteils anzuordnen, wobei die Permanentmagnete mittels Nuten in den Randbereichen der Ausschnitte radial verschiebbar gelagert sind. Sämtliche Permanentmagnete werden von einem Haltegurt auf ihrer Position in den Ausschnitten gehalten.

Der Erfindung liegt die Aufgabe zugrunde bei einem Synchron-Linearmotor, fertig aufmagnetisierte Permanentmagnete mit geringem Bauaufwand, insbesondere unter Vermeidung einer übermäßigen Massenzunahme des Sekundärteils, und mit hoher Präzision am Sekundärteil bzw. an der Trägerplatte zu befestigen.

Diese Aufgabe wird nach der Erfindung durch ein Verfahren mit den Merkmalen des Anspruchs 1 gelöst.

Die Distanzelemente können aus jeweils zwei in der Trägerplatte nebeneinander angeordneten Distanzstiften bestehen.

In gleicher Weise kann die Positionierung der Permanentmagnete an ihren Seiten mittels seitlicher Positionierstifte oder Positionierleisten erfolgen.

Da zum einen die Permanentmagnete aus sehr sprödem und korrosionsanfälligem Material bestehen und zum anderen diese nur zu einem geringen Teil von dem Primärteil überdeckt sind, ist es erforderlich, die offen liegenden Bereiche der Permanentmagnete zu schützen. Hierzu ist es vorteilhaft, die Permanentmagnete mit einem Abdeckblech zu schützen, das an den Seiten mit Falzen versehen ist, die die Permanentmagnete an deren Seitenflächen direkt oder deren seitliche Positionierelemente, wie z.B. die Seitenleisten, die seitlichen Positionierstifte oder die Einzelrahmen umgreifen. Aufgrund der Federungswirkung der Falze ist das Abdeckblech mit dem Sekundärteil verbunden und bildet einen zuverlässigen Schutz gegen mechanische und korrosive Schadeinwirkungen.

Die konstruktive Gestaltung von Sekundärteilen von Synchron-Linearmotoren wird nachfolgend anhand von in der Zeichnung dargestellten von Anspruch 1 nicht gedeckten alternativen Beispielen erläutert. Es zeigen:
- Fig. 1: die perspektivische Ansicht der Einzelbauteile eines Sekundärteils,
- Fig. 2: die Ansicht des Sekundärteils gemäß Fig. 1 mit seitlichen Positionierleisten
- Fig. 3: den Querschnitt durch ein Sekundärteil mit Abdeckblech gemäß Fig. 1.

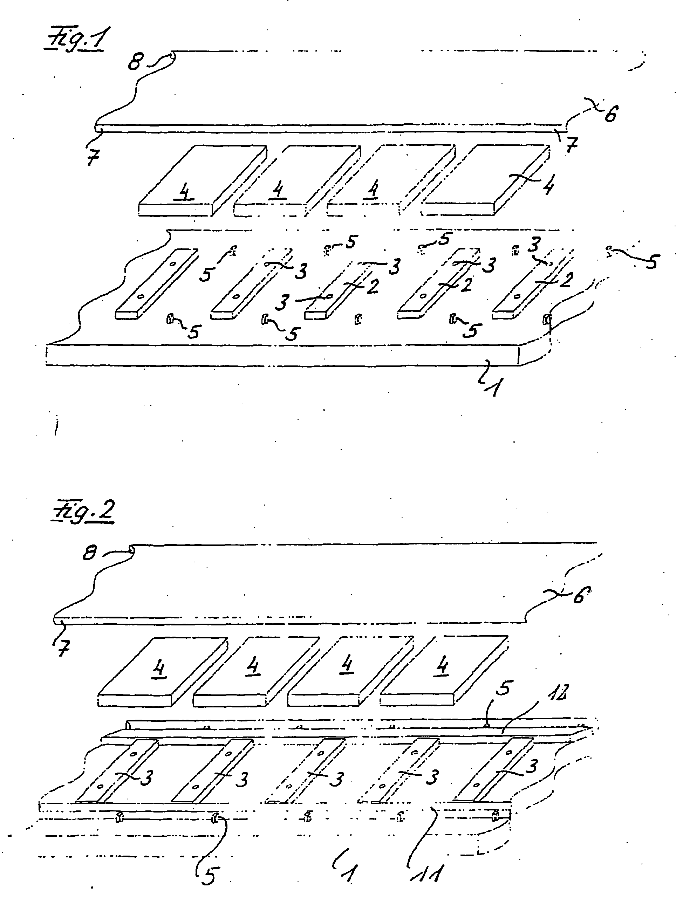

Die Fig. 1 zeigt die Trägerplatte 1 des Sekundärteils eines Synchron-Linearmotors mit Quersprossen 2 nicht der erfindung entsprechend aus unmagnetischem Material. Die Quersprossen 2 sind mittels Stiften 3 befestigt. Die Quersprossen 2 sind exakt nach dem Polteilungsrastermaß des Synchron-Linearmotors angeordnet. Zwischen den Quersprossen 2 werden die Permanentmagnete 4 eingefügt und mit der Trägerplatte 1 verklebt. Zur seitlichen Fixierung der Permanentmagnete 4 sind seitliche Positionierstifte 5 angeordnet. Nach der Verklebung der Permanentmagnete 4 werden diese mit der aus einem dünnen, Blech bestehenden Abdeckplatte 6 abgedeckt, die zu beiden Seiten Falze 7 und 8 aufweist, die unter Federvorspannung zu beiden Seiten der Permanentmagnete 4 festklemmbar sind. Anstelle der Quersprossen 2 fungieren gemäß der nicht dargestellten erfindungsgemäßen Lösung die Stifte 3 als Distanzelemente für die Permanentmagnete 4.

Das von Anspruch 1 nicht gedeckte Beispiel nach Fig. 2 entspricht dem vom Anspruch 1 nicht gedeckten Beispiel nach Fig. 1, jedoch sind zusätzlich neben den seitlichen Positionierstiften Positionierleisten 11 und 12 angeordnet.

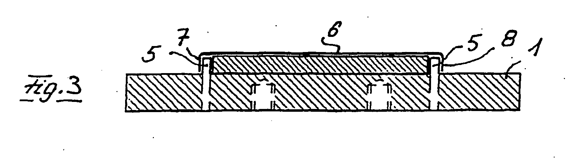

Die Fig. 3 zeigt einen Querschnitt durch ein fertig montiertes Sekundärteil nach Fig. 1 mit auf der Trägerplatte 1 aufgeklebten Permanentmagneten 4 und seitlichen Positionierstiften 5. Die Abdeckplatte 6 umgreift seitlich die Permanentmagnete 4 und ist mit den federnd gegen die Positionierstifte 5 gedrückten Falzen 7 und 8 befestigt.

## Patentansprüche

1. Verfahren zur Herstellung eines Synchron-Linearmotors mit einem mit einer Wicklung versehenen Primärteil und einem Sekundärteil, das aus einer langgestreckten ferromagnetischen Trägerplatte besteht, auf der jeweils einen Parallelspalt zueinander einschließende Permanentmagnete befestigt werden, wobei zwischen den Permanentmagneten (4) dem Polteilungsrastermaß des Synchron-Linearmotors entsprechende Distanzelemente aus unmagnetischem Material angeordnet werden, **dadurch gekennzeichnet, dass** die bereits fertig aufmagnetisierten Permanentmagnete (4) auf der Trägerplatte (1) festgeklebt werden und dass in der Trägerplatte Stifte (3) als Distanzelemente befestigt werden.

2. Verfahren nach Anspruch 1, dadurch gekennezeichnet, dass die Permanentmagnete (4) in seitlicher Richtung durch beidseitig angeordnete Positionierstifte (5) positioniert sind.

3. Verfahren nach Anspruch 1, **dadurch gekennzeichnet, dass** die Positionierung der Permanentmagnete (4) in seitlicher Richtung durch beidseitig angeordnete Positionierleisten (11, 12) erfolgt.

4. Verfahren nach Anspruch 3, **dadurch gekennzeichnet, dass** die Positionierleisten (11, 12) mittels Positionierstiften (5) auf der Trägerplatte fixiert werden.

5. Verfahren nach einem der Ansprüche 1 bis 4; **dadurch gekennzeichnet, dass** die Permanentmagnete (4) mittels einer zu beiden Seiten der Permanentmagnete (4) verankerten Abdeckplatte (6) abgedeckt werden.

6. Verfahren nach Anspruch 5, **dadurch gekennzeichnet, dass** die Abdeckplatte (6) seitlich mit Falzen (7, 8) versehen ist, die die Permanentmagnete (4) und gegebenenfalls die Positionierelemente seitlich umgreifen.

7. Verfahren nach Anspruch 6, **dadurch gekennzeichnet, dass** die Falze (7, 8) unter Federvorspannung an den Permanentmagneten (4) und gegebenenfalls an den Positionierelementen anliegen.

## Claims

1. Method for the production of a synchronous linear motor, comprising a primary part provided with a coil and a secondary part consisting of an elongated ferromagnetic support plate onto which permanent magnets, which in each case enclose a parallel gap between one another, are attached, spacers being arranged between the permanent magnets (4), said spacers being made of non-magnetic material and corresponding to the pole separation spacing of the synchronous linear motor, **characterised in that** the already fully magnetised permanent magnets (4) are glued onto the support plate (1) and **in that** studs (3) are fastened in the support plate as spacers.

2. Method according to claim 1, **characterised in that** the permanent magnets (4) are positioned in the lateral direction by means of positioning studs (5) arranged on both sides.

3. Method according to claim 1, **characterised in that** the permanent magnets (4) are positioned in the lateral direction by means of positioning rails (11, 12) arranged on both sides.

4. Method according to claim 3, **characterised in that** the positioning rails (11, 12) are fixed onto the support plate by means of positioning studs (5).

5. Method according to any one of claims 1 to 4, **characterised in that** the permanent magnets (4) are covered by a cover plate (6) which is anchored on both sides of the permanent magnets (4).

6. Method according to claim 5, **characterised in that** the cover plate (6) is provided laterally with folds (7, 8) which laterally encompass the permanent magnets (4), and optionally the positioning elements.

7. Method according to claim 6, **characterised in that** the folds (7, 8) press against the permanent magnets (4), and optionally against the positioning elements, under spring bias.

## Revendications

1. Procédé de fabrication d'un moteur linéaire synchrone avec une partie primaire pourvue d'un enroulement et une partie secondaire qui se compose d'une plaque de support ferromagnétique oblongue, sur laquelle des aimants permanents incluant respectivement un entrefer parallèle sont fixés, entre les aimants permanents (4) étant disposés des éléments d'écartement en un matériau amagnétique correspondant à la dimension du pas polaire du moteur linéaire synchrone, **caractérisé en ce que** les aimants permanents (4) déjà complètement magnétisés sont fixés par collage sur la plaque de support (1) et **en ce que** des goupilles (3) sont fixées dans la plaque de support comme éléments d'écartement.

2. Procédé selon la revendication 1, **caractérisé en ce que** les aimants permanents (4) sont positionnés dans le sens latéral par des goupilles de positionnement (5) disposées des deux côtés.

3. Procédé selon la revendication 1, **caractérisé en ce que** les aimants permanents (4) sont positionnés dans le sens latéral par des barrettes de positionnement (11, 12) disposées des deux côtés.

4. Procédé selon la revendication 3, **caractérisé en ce que** les barrettes de positionnement (11, 12) sont fixées au moyen des goupilles de positionnement (5) sur la plaque de support.

5. Procédé selon l'une des revendications 1 à 4, **caractérisé en ce que** les aimants permanents (4) sont recouverts au moyen d'une plaque de recouvrement (6) ancrée des deux côtés des aimants permanents (4).

6. Procédé selon la revendication 5, **caractérisé en ce que** la plaque de recouvrement (6) est pourvue latéralement de replis (7, 8) qui entourent latéralement les aimants permanents (4) et le cas échéant les éléments de positionnement.

7. Procédé selon la revendication 6, **caractérisé en ce que** les replis (7, 8) s'appliquent sous précontrainte élastique contre les aimants permanents (4) et le cas échéant contre les éléments de positionnement.
